(19) Europäisches Patentamt

European Patent Office

Office européen des brevets

(11) **EP 0 653 387 B1**

## (12) EUROPEAN PATENT SPECIFICATION

(45) Date of publication and mention
of the grant of the patent:
**26.01.2000 Bulletin 2000/04**

(51) Int. Cl.[7]: **C03C 4/02**, C03C 3/087

(21) Application number: **94117716.4**

(22) Date of filing: **10.11.1994**

(54) **Bronze-colored glass composition**

Bronzefarbende Glaszusammensetzung

Composition de verre coloré en bronze

(84) Designated Contracting States:
**AT BE CH DE DK ES FR GB IT LI LU SE**

(30) Priority: **16.11.1993 US 153399**

(43) Date of publication of application:
**17.05.1995 Bulletin 1995/20**

(73) Proprietor:
**PPG Industries Ohio, Inc.
Cleveland, OH 44111 (US)**

(72) Inventors:
• **Krumwiede, John Franklin
Cheswick, Pa. 15024 (US)**

• **Longobardo, Anthony Vincent
Butler, Pa. 16001 (US)**
• **Shelestak, Larry John
Bairdford, Pa. 15006 (US)**

(74) Representative:
**Sternagel, Hans-Günther, Dr. et al
Patentanwälte Sternagel & Fleischer
Braunsberger Feld 29
51429 Bergisch Gladbach (DE)**

(56) References cited:
**EP-A- 0 561 337          FR-A- 2 672 587
FR-A- 2 682 372          FR-A- 2 690 437
GB-A- 2 162 835          US-A- 4 190 452**

# EP 0 653 387 B1

**Description**

This invention involves a bronze colored glass that has a luminous transmittance that makes it highly desirable for use in forward vision areas of a vehicle, such as a windshield and front door windows. In particular, the glass has a luminous transmittance of 70% or greater. In addition, the glass of the present invention generally exhibits infrared and total solar energy transmittance comparable to typical green glasses used in automotive applications to reduce heat gain in the interior of the enclosure. The glass is also compatible with flat glass manufacturing methods.

Various heat-absorbing glass substrates are known in the art. The primary colorant in typical green tinted automotive glasses is iron, which is usually present in both the $Fe_2O_3$ and FeO forms. As is conventional, the total amount of iron present in a glass is expressed herein as $Fe_2O_3$, regardless of the form actually present. Typical green tinted automotive glass has about 0.5 percent by weight total iron, with the ratio of FeO to total iron being about 0.25.

Some glasses include nickel oxide as a colorant to provide a yellow brown to green brown color component to the glass. For example, U.S. Reissue Patent No. 25,312 to Duncan et al., includes nickel oxide as a colorant to produce a gray colored glass. However, inclusion of nickel containing materials must be carefully controlled because the presence of nickel during the melting process sometimes leads to the formation of nickel sulfide stones in the glass. Additional potential problems faced when using nickel include haze formation on the glass surface due to reduction of the nickel in the tin bath and change in the glass color when it is heat treated.

To avoid this problem, nickel-free bronze and gray glasses containing iron oxide, cobalt oxide, and selenium were developed as disclosed in US-A-3,296,004 to Duncan et al., US-A-3,723,142 to Kato et al. and GB-A-1,331,492 to Bamford. In US-A-4,104,076 to Pons, instead of nickel, $Cr_2O_3$ or $UO_2$ are used in combination with iron oxide, cobalt oxide, and selenium to produce gray glass. A more recent, nickel-free version of gray glass is disclosed in US-A-5,023,210 to Krumwiede et al. which uses iron oxide, cobalt oxide, selenium, and chromic oxide as colorants.

From FR-A-2 690 437 or the corresponding DE-A-43 13 215 colored glass sheets for cars are known having a base glass portion and a colorant portion comprising $CeO_2$, $TiO_2$, $Fe_2O_3$, CoO, NiO and Se. The bronze colored glass has a luminous transmittance of at least 70 % at a thickness of 4 mm and a transmittance within the UV-wavelength range of not more than 30 %.

In US-A-4,190,452 a neutral bronze glass sheet is described having a dominant wavelength in the vicinity of 575 mm and a luminous transmittance above 70 %. $Fe_2O_3$, Se and CoO are used as coloring agents.

EP-A-561 337 refers to a bronze-colored infrared and ultraviolet radiation absorbing glass. $Fe_2O_3$, $CaO_2$, CoO and Se are used as coloring agents.

From GB-A-2162 835 a colored soda-lime glass is known comprising $Fe_2O_3$, Se, Co. Ni, $Cr_2O_3$ and MuO as coloring agents.

Many of the commercially available bronze and gray glasses exhibit solar performance properties inferior to those of conventional green automotive glass. It would be desirable to have a bronze glass that may be used for the vision area of a vehicle with acceptable solar performance properties and further that is compatible with commercial flat glass manufacturing techniques.

This object is attained by a bronze colored glass composition having a base glass portion comprising:

| | |
|---|---|
| $SiO_2$ | 66 - 75 percent by weight |
| $Na_2O$ | 10 - 20 |
| CaO | 5 - 15 |
| MgO | 0-5 |
| $Al_2O_3$ | 0-5 |
| $K_2O$ | 0-5 |
| BaO | 0 - 1 |

and a colorant portion consisting essentially of:

| | |
|---|---|
| $Fe_2O_3$ (total iron) | 0.38 to 0.48 percent by weight |

(continued)

| | |
|---|---|
| FeO | up to 0.13 percent by weight |
| Se | 3 - 15 PPM |
| CoO | 0 - 5 PPM |
| NiO | 0 - 50 PPM |
| $Cr_2O_3$ | o - 50 PPM |

the glass having a luminous transmittance of 70 percent or greater at a thickness of 4.1 millimeters, a total solar energy transmittance of 65 percent or less, the dominant wavelength in the range of 565 nm to 575 nm and an excitation purity between 6 to 9%.

In a preferred embodiment of the invention, that a bronze colored glass with a luminous transmittance of 70% and higher at a thickness of 4.1 millimeters (0.160 inches) is produced using as colorants: 0.38 to 0.48 wt. % $Fe_2O_3$, up to 0.13 wt. % FeO and 3 to 15 PPM Se, and preferably 0.395 to 0.465 wt. % $Fe_2O_3$, 0.75 to 0.12 wt. % FeO and 6 to 12 PPM Se.

In the bronze glass composition chromium, nickel and/or cobalt are preferably also included additional colorants.

The dominant wavelength of the glasses in the present invention may vary somewhat in accordance with particular color preferences. In the present invention, it is preferred that the glass be a bronze color characterized by dominant wavelengths in the range of 565 to 575 nanometers, with an excitation purity between 6 to 9%.

DETAILED DESCRIPTION

The base glass of the present invention, that is, the major constituents of the glass without colorants, is commercial soda-lime-silica glass characterized as follows:

| | Weight % |
|---|---|
| $SiO_2$ | 66-75 |
| $Na_2O$ | 10-20 |
| CaO | 5-15 |
| MgO | 0-5 |
| $Al_2O_3$ | 0-5 |
| $K_2O$ | 0-5 |
| BaO | 0-1 |

To this base glass, the preferred embodiment of the present invention adds colorants in the form of iron and selenium. The glass of this embodiment of the present invention is essentially nickel-free; that is, no deliberate addition of nickel or nickel compounds is made, although the possibility of traces of nickel due to contamination may not always be avoided and further is essentially free of other colorants. It should be appreciated that the glass compositions disclosed herein may include small amounts of other materials, for example melting and refining aids, tramp materials or impurities. Such materials may include, but are not limited to chromium, cobalt, manganese, cerium, molybdenum, titanium, chlorine, zinc, zirconium, sulfur, fluorine, lithium and strontium. It should be further appreciated that some of these materials as well as others may be added to the glass to improve the solar performance of the glass as will be discussed later in more detail. In another embodiment of the invention, nickel, chromium and/or cobalt may also be added to the glass composition to provide the desired spectral and performance requirements.

The selenium colorant contributes a pink color to the glass as well as a brown color when complexed with iron to form iron selenide (FeSe). Iron contributes yellow and blue in varying proportions depending upon the oxidation state.

The glass of the present invention may be melted and refined in a continuous, large-scale, commercial melting operation and formed into flat glass sheets of varying thicknesses by the float method in which the molten glass is supported on a pool of molten metal, usually tin, as it assumes a ribbon shape and is cooled. It should be appreciated that as a result of forming the glass on molten tin, measurable amounts of tin oxide may migrate into surface portions of the glass on the side that was in contact with the tin. Typically, a piece of float glass has an $SnO_2$ concentration of at least 0.05 wt. % in the first few microns below the surface of the glass that was in contact with the tin.

The total amount of iron present in the glass is expressed herein in terms of $Fe_2O_3$ in accordance with standard analytical practice, but that does not imply that all of the iron is actually in the form of $Fe_2O_3$. Likewise, the amount of iron in the ferrous state is reported as FeO, even though it may not actually be present in the glass as FeO. The proportion of the total iron in the ferrous state is used as a measure of the redox state of the glass and is expressed as the ratio $FeO/Fe_2O_3$, which is the weight percent of iron in the ferrous state (expressed as FeO) divided by the weight percent of total iron (expressed as $Fe_2O_3$). Unless stated otherwise, the term $Fe_2O_3$ in this specification shall mean total iron expressed in terms of $Fe_2O_3$ and the term FeO shall mean iron in the ferrous state expressed in terms of FeO.

The glass compositions disclosed in the present invention may be made using any of several types of melting arrangements, such as but not limited to, a conventional, overhead fired continuous melting operation as is well known in the art or a multi-stage melting operation, of the type that is discussed later in more detail. However, for glass compositions having a redox of less than 0.30, the former operation is preferred and for glass compositions having a redox of 0.30 or greater, the latter operation is preferred.

Conventional, overhead fired continuous melting operations are characterized by depositing batch material onto a pool of molten glass maintained within a tank type melting furnace and applying thermal energy until the materials are melted into the pool of molten glass. The melting tanks conventionally contain a large volume of molten glass so as to provide sufficient residence time for currents in the molten glass to affect some degree of homogenization and fining before the glass is discharged into a forming operation.

The multi-stage glass melting and refining operation disclosed in US-A-(s) 4,381,934 and 4,792,536 to Kunkle et al., 4,792,536 to Pecoraro et al. and 4,886,539 to Cerutti et al. is characterized by separate stages whereby more flexibility in controlling redox conditions is provided. The overall melting process disclosed in these patents consists of three stages: a liquefaction stage, a dissolving stage, and a vacuum refining stage. In the liquefaction stage, batch materials, preferably in a pulverulent state, are fed into a rotating, drum-shaped liquefying vessel. As batch material is exposed to the heat within the vessel, liquefied material flows down a sloped batch material lining to a central drain opening at the bottom of the vessel. A stream of liquefied material falls freely from the liquefaction vessel into a dissolving vessel for the dissolving stage. The dissolving vessel completes the dissolution of unmelted particles in the liquefied material coming from the liquefaction stage by providing residence time at a location isolated from the downstream refining stage. The dissolving vessel may be in the form of a horizontally elongated refractory basin with the inlet and outlet at opposite ends thereof so as to assure adequate residence time. The refining stage preferably consists of a vertically upright vessel that may be generally cylindrical in configuration having an interior ceramic refractory lining shrouded in a gas-tight, water-cooled casing. As the molten material enters the vessel from the dissolving vessel, it encounters a reduced pressure within the refining vessel. Gases included in the melt expand in volume, creating a foam. As foam collapses, it is incorporated into the liquid body held in the refining vessel. Refined molten material is drained from the bottom of the refining vessel into a receiving chamber and delivered to a float forming chamber.

A stirring arrangement may be employed in the multi-stage process to homogenize the glass after it has been refined in order to produce glass of the highest optical quality. If desired, a stirring arrangement may be integrated with a float forming chamber, whereby the glass in the stirring chamber rests on a layer of molten metal. The molten metal may be continuous with the molten metal constituting the support in the forming chamber, and is usually comprised essentially of tin.

The multi-stage operation discussed above generally operates at a redox level of 0.30 or higher; however redox levels below 0.30 may be achieved by increasing the amount of oxidizing constituents in the glass batch. For example, additional manganese oxide may be added to lower the redox level. Redox may also be controlled by adjusting the gas/$O_2$ ratio of the burners.

The transmittance data provided throughout this disclosure is based on a glass thickness of 0.160 inches (4.1 millimeters). Luminous transmittance (LTA) is measured using C.I.E. 1931 standard illuminant "A" over the wavelength range 380 to 770 nanometers at 10 nanometer intervals. Total solar ultraviolet transmittance (TSUV) is measured over the wavelength range 300 to 390 nanometers at 10 nanometer intervals. Total solar infrared transmittance (TSIR) is measured over the wavelength range 800 to 2100 nanometers at 50 nanometer intervals. Total solar energy transmittance (TSET) represents a computed value based on measured transmittances from 300 to 2100 nanometers at 50 nanometer intervals. All solar transmittance data is calculated using Parry Moon air mass 2.0 solar data. Glass color in terms of dominant wavelength and excitation purity are measured using C.I.E. 1931 standard illuminant "C" with a 2° observer.

To determine this transmittance data, the transmittance values are integrated over the wavelength range [a,b]. This range is divided into n equal subintervals of length h by points $\{X_0, X_1, ..., X_n\}$ where $X_i = a + (i \times h)$. In the present disclosure, the Rectangular Rule is used to compute the transmittance data. An interpolating function is used to approximate the integrand $f$ in each subinterval. The sum of integrals of this function provides an approximation of the integral:

$$I = \int_b^a f(X)dX$$

In the case of the Rectangular Rule, a constant value $f(X_i)$ is used as an approximation of $f(X)$ on $[X_{i-1},X_i]$. This yields a step-function approximation of $f(X)$ on $[a,b]$, and the numerical integration formula:

$$I = \sum_{i=1}^{n} f(X_i) \times h$$

The representative base glass composition for the examples comprises:

| | |
|---|---|
| $SiO_2$ | 72.8% by weight |
| $Na_2O$ | 13.8 |

Table 1 illustrates examples of glass compositions at a 0.160 in. (4.1 mm) reference thickness which embody the principles of the present invention. Only the colorant portions of the examples are listed in the table below, with $Fe_2O_3$ being total iron, including that present as FeO.

The information provided in Table 1 is based on experimental laboratory melts. It is contemplated that the glass disclosed in the present invention preferably be made using a conventional, overhead fired continuous melting process, although either of the processes disclosed earlier may be used. It should also be noted that the analysis of these melts identified CoO and NiO levels of less than 3 PPM and $Cr_2O_3$ levels of less than 10 PPM. The low levels of these materials are considered to be tramp and/or residual material levels.

| | |
|---|---|
| CaO | 8.8 |
| MgO | 3.8 |
| $Al_2O_3$ | 0.13 |

It should be appreciated that this composition may vary especially as a result of the actual amount of colorant present in the glass composition.

TABLE 1

| | Ex. 1 | Ex. 2 | Ex. 3 | Ex. 4 | Ex. 5 | Ex. 6 | Ex. 7 |
|---|---|---|---|---|---|---|---|
| $Fe_2O_3$ wt.% | 0.463 | 0.455 | 0.459 | 0.463 | 0.399 | 0.398 | 0.398 |
| FeO wt.% | 0.093 | 0.102 | 0.092 | 0.093 | 0.080 | 0.078 | 0.082 |
| Redox | 0.201 | 0.244 | 0.200 | 0.202 | 0.201 | 0.197 | 0.206 |
| Se PPM | 13 | 10 | 10 | 8 | 9 | 8 | 6 |
| LTA | 69.53 | 70.69 | 70.86 | 71.46 | 72.93 | 73.76 | 74.68 |
| TSIR | 50.46 | 47.12 | 50.85 | 50.35 | 55.13 | 56.11 | 54.59 |
| TSUV | 33.93 | 37.64 | 35.94 | 36.88 | 38.87 | 40.07 | 41.01 |
| TSET | 57.88 | 56.93 | 58.82 | 58.90 | 62.10 | 63.02 | 62.78 |
| DW nm | 574.4 | 573.9 | 574.1 | 573.4 | 573.0 | 573.5 | 570.6 |

TABLE 1 (continued)

| | Ex. 1 | Ex. 2 | Ex. 3 | Ex. 4 | Ex. 5 | Ex. 6 | Ex. 7 |
|---|---|---|---|---|---|---|---|
| Pe % | 9.39 | 8.21 | 8.5 | 7.86 | 7.18 | 7.12 | 5.79 |

Referring to Table 1, the present invention provides a bronze colored glass using a standard soda-lime-silica glass base composition and iron and selenium as colorants. Not all of the examples are the same color as indicated by the dominant wavelengths (DW) and excitation purities (Pe). In the present invention, it is preferred that the glass be a bronze color characterized by dominant wavelengths in the range of 565 to 575 nanometers, with an excitation purity between 6 to 9%.

In the present invention, the colorants used to produce a bronze colored glass with an LTA of 70% or greater include 0.38 to 0.48 wt. % $Fe_2O_3$, up to 0.13 wt. % FeO and 3 to 15 PPM Se, and preferably 0.395 to 0.465 wt.% $Fe_2O_3$, 0.075 to 0.12 wt.% FeO and 6 to 12 PPM Se.

It is also believed that the bronze glass of the present invention may be produced using chromium, cobalt and/or nickel as additional colorants. In particular, in this alternate embodiment of the invention, the glass may include up to 50 PPM $Cr_2O_3$, up to 50 PPM NiO and up to 5 PPM CoO in addition to the iron and selenium discussed above.

The redox ratio for the glass of the present invention is maintained between about 0.20 to 0.30, and preferably between 0.24 to 0.28 which is the typical operating range for a conventional overhead fired melting operation. Higher redox levels may be attained by processes disclosed herein, but the use of higher redox ratios is preferably avoided to prevent excessive volatilization of selenium during melting.

Glass made by the float process typically ranges from a sheet thickness of about 1 millimeters to 10 millimeters. For the vehicle glazing applications, it is preferred that the glass sheets have a thickness within the thickness range of 1 .8 to 6 millimeters.

If desired, ultraviolet radiation absorbing materials may be added to the glass compositions of the present invention to improve its solar performance. Although not limiting in the present invention, a total of up to 2.0 wt. % of oxides of cerium, vanadium, titanium and molybdenum and combinations thereof may be used as UV absorbers to reduce the TSUV of the glass. In a preferred embodiment of the invention, $TiO_2$ is the preferred UV absorber and may be added in an amount ranging from 0.1 to 1.0 wt. % of the glass composition, and more preferably 0.02 to 0.5 wt. %.

In general, when the glass is used in a forward vision area of a vehicle, it is required that the LTA be 70% or greater. In addition, for a forward vision area application, it is preferred that the glass composition of the present invention provide a total solar energy transmittance of no greater than 65%, and more preferably no greater than 60%. This type of performance would make the glass comparable to the performance of standard green automotive glasses.

## Claims

1. A bronze colored glass composition having a base glass portion comprising:

| $SiO_2$ | 66 - 75 percent by weight |
|---|---|
| $Na_2O$ | 10 - 20 |
| CaO | 5 - 15 |
| MgO | 0 - 5 |
| $Al_2O_3$ | 0 - 5 |
| $K_2O$ | 0 - 5 |
| BaO | 0 - 1 |

and a colorant portion consisting essentially of:

| $Fe_2O_3$ (total iron) | 0.38 to 0.48 percent by weight |
|---|---|
| FeO | up to 0.13 percent by weight |

(continued)

| Se | 3 - 15 PPM |
|---|---|
| CoO | 0 - 5 PPM |
| NiO | 0 - 50 PPM |
| $Cr_2O_3$ | o - 50 PPM |

the glass having a luminous transmittance of 70 percent or greater at a thickness of 4.1 millimeters, a total solar energy transmittance of 65 percent or less, the dominant wavelength in the range of 565 nm to 575 nm and an excitation purity between 6 to 9%.

2. The composition as in claim 1 wherein the $Fe_2O_3$ concentration is from 0.395 to 0.465 weight percent, the FeO concentration is from 0.075 to 0.12 weight percent and the Se concentration is from 6 to 12 PPM.

3. The composition as in claim 1 further including additional ultraviolet absorbing material.

4. The composition as in claim 3 wherein said ultraviolet absorbing material is an oxide of a material selected from a group consisting essentially of cerium, vanadium, titanium and molybdenum and combination thereof in an amount up to 2.0 wt. % of the glass composition.

5. The composition as in claim 4 wherein said $TiO_2$ is in an amount from 0.1 to 1.0 wt. %.

6. The composition as in claim 4 wherein said $TiO_2$ is in an amount from 0.2 to 0.5 wt. %.

7. A glass sheet made from the composition as recited in any of claims 1 to 6.

8. The glass sheet as in claim 7 wherein the sheet has a thickness between 1.8 to 6 mm.

**Patentansprüche**

1. Bronzefarbene Glaszusammensetzung mit einem Grundglasanteil, enthaltend:

| $SiO_2$ | 66 - 75 Gew.-% |
|---|---|
| $Na_2O$ | 10 - 20 Gew.-% |
| CaO | 5 - 15 Gew.-% |
| MgO | 0 - 5 Gew.-% |
| $Al_2O_3$ | 0 - 5 Gew.-% |
| $K_2O$ | 0 - 5 Gew.-% |
| BaO | 0 - 1 Gew.-% |

und einen farbgebenden Anteil, im wesentlichen bestehend aus:

| $Fe_2O_3$ (Gesamteisen) | 0,38 bis 0,48 Gew.-% |
|---|---|
| FeO | bis 0,13 Gew.-% |
| Se | 3 - 15 ppm |
| CoO | 0 - 5 ppm |

(continued)

| NiO | 0 - 50 ppm |
| $Cr_2O_3$ | 0 - 50 ppm, |

wobei das Glas bei einer Dicke von 4,1 mm eine Lichtdurchlässigkeit von 70% oder höher, eine Gesamtdurchlässigkeit für Sonnenenergie von 65 % oder weniger, eine farbtongleiche Wellenlänge im Bereich von 565 nm bis 575 nm und einen spektralen Farbanteil zwischen 6 und 9 % aufweist.

2. Zusammensetzung nach Anspruch 1, dadurch gekennzeichnet, daß die $Fe_2O_3$-Konzentration 0,395 bis 0,465 Gew.-%, die FeO-Konzentration 0,075 bis 0,12 Gew.-% und die Se-Konzentration 6 bis 12 ppm beträgt.

3. Zusammensetzung nach Anspruch 1, dadurch gekennzeichnet, daß sie zusätzlich ein UV Strahlung absorbierendes Material enthält.

4. Zusammensetzung nach Anspruch 3, dadurch gekennzeichnet, daß das UV Strahlung absorbierende Material ein Oxid eines Materials ist, ausgewählt aus der im wesentlichen aus Cer, Vanadium, Titan und Molybdän und Kombinationen derselben bestehenden Gruppe, vorhanden in einer Menge von bis zu 2 Gew.-% der Glaszusammensetzung.

5. Zusammensetzung nach Anspruch 4, dadurch gekennzeichnet, daß das $TiO_2$ in einer Menge von 0,1 bis 1 Gew.-% vorhanden ist.

6. Zusammensetzung nach Anspruch 4, dadurch gekennzeichnet, daß das $TiO_2$ in einer Menge von 0,2 bis 0,5 Gew.-% vorhanden ist.

7. Glasscheibe, hergestellt aus der Zusammensetzung nach einem der Ansprüche 1 bis 6.

8. Glasscheibe nach Anspruch 7, dadurch gekennzeichnet, daß die Scheibe eine Dicke zwischen 1,8 mm und 6 mm aufweist.

**Revendications**

1. Composition de verre de la couleur du bronze ayant une partie de verre de base comprenant :

| $SiO_2$ | 66 - 75% en poids |
| $Na_2O$ | 10 - 20 |
| CaO | 5 - 15 |
| MgO | 0 - 5 |
| $Al_2O_3$ | 0 - 5 |
| $K_2O$ | 0 - 5 |
| BaO | 0 - 1 |

et une partie colorante formée essentiellement de :

| $Fe_2O_3$ (fer total) | 0,38 à 0,48 % en poids |
| FeO | jusqu'à 0,13% en poids |
| Se | 3-15 ppm |

(continued)

| | |
|---|---|
| CoO | 0 - 5 ppm |
| NiO | 0 - 50 ppm |
| $Cr_2O_3$ | 0 - 50 ppm, |

le verre ayant une transmission lumineuse de 70% ou plus à une épaisseur de 4,1 mm, une transmission d'énergie solaire totale de 65% ou moins, la longueur d'onde dominante dans la gamme de 565 nm à 575 nm et une pureté d'excitation entre 6 et 9%.

2. Composition suivant la revendication 1, dans laquelle le concentration en $Fe_2O_3$ est de 0,395 à 0,465% en poids, la concentration en FeO est de 0,075 à 0,12% en poids et la concentration en Se est de 6 à 12 ppm.

3. Composition suivant la revendication 1, comprenant de plus une matière absorbant dans l'ultraviolet additionnelle.

4. Composition suivant la revendication 3, dans laquelle la matière absorbant dans l'ultraviolet est un oxyde d'une matière choisie dans le groupe comprenant essentiellement le cérium, le vanadium, le titane et le molybdène et leurs combinaisons en une quantité allant jusqu'à 2,0% en poids de la composition de verre.

5. Composition suivant la revendication 4, dans laquelle le $TiO_2$ est en une quantité de 0,1 à 1,0% en poids.

6. Composition suivant la revendication 4, dans laquelle le $TiO_2$ est en une quantité de 0,2 à 0,5% en poids.

7. Feuille de verre faite de la composition suivant l'une quelconque des revendications 1 à 6.

8. Feuille de verre suivant la revendication 7, dans laquelle la feuille a une épaisseur entre 1,8 et 6 mm.